# EUROPEAN PATENT APPLICATION

(11) **EP 1 271 404 A2**
(43) Date of publication of application: **02.01.2003**
(21) Application number: 02014004.2
(22) Date of filing: 26.06.2002
(51) Int. Cl.: G06T 5/00

(54) **Generation of image file**

(30) Priority: 27.06.2001 JP 2001195048
(71) Applicant: SEIKO EPSON CORPORATION, Shinjuku-ku, Tokyo 163-0811 (JP)
(72) Inventor: Nakami, Yoshihiro, Suwa-shi, Nagano-ken, 392-8502 (JP)
(74) Representative: Winter, Brandl, Fürniss, Hübner, Röss, Kaiser, Polte Partnerschaft

(57) **Abstract**

In an image output system, image data generated by a digital still camera is output with a color printer. The digital still camera stores image processing control data preset by a maker of the digital still camera to be changeable for each image, and a user's setting of offset data. The image output system then generates an image file including the image data, the image processing control data, and the offset data. The color printer makes the image data to be subjected to a preset series of image processing based on the image processing control data (including the offset data) in the image file, and outputs a resulting processed image.

## Description

### BACKGROUND OF THE INVENTION

### Field of the Invention

The present invention relates to a technique of generating an image file that includes image data and image processing control data used for image processing of the image data.

### Description of the Related Art

A digital still camera, which has recently become common, utilizes a light-reactive semiconductor element, such as a charge coupled device (CCD) for conversion of images into electric signals and stores the converted electric signals as digital data in a magnetic disc or a semiconductor memory. The digital still camera generally has a liquid crystal display. The user can thus check shot images in the field and delete non-required images. The image data generated by the digital still camera may be output with an image output apparatus, such as a monitor of a general purpose computer or a printer.

The images generated by digital still cameras of different makers or different models may have variations in brightness and color tint. The output images with image output apparatuses of different makers or different models may also have variations in brightness and color tint. In many cases, the actually output image with the image output apparatus is significantly different from the user's desired image.

Different users have different tastes. Even if the makers of the digital still camera and the printer succeed in setting the respective apparatuses to attain ideal color reproduction, the settings may not satisfy each user's taste. In such cases, the user should individually process the image data according to the image output environment of the printer and the taste of the user. The operations of image processing are rather time and labor consuming. Once original image data has been processed, there is a difficulty in returning the processed image data into the original image data. The original image data may be stored as a separate file according to the requirements.

This problem is not characteristic of the digital still camera, but occurs in other image data generation apparatuses, such as a digital video camera and a scanner.

### SUMMARY OF THE INVENTION

The object of the present invention is thus to provide a technique of flexibly outputting an image according to the taste of a user who generates image data.

At least part of the above and the other related objects is attained by a first image data generation apparatus that generates image data related to image processing control data used for image processing of the image data. The first image data generation apparatus includes: an image data generation module that generates the image data; an image processing control data input module that receives input of the image processing control data; an offset data input module that receives input of offset data of the image processing control data; and an relation generation module that relates the image data to the image processing control data and the offset data.

The relation generation module may generate an image file including image data, image processing control data, and offset value of the image processing control data. For example, an image file in the Exif format has an image data storage area and an attribute data storage area. In this format, the image processing control data and the offset data are stored in the attribute data storage area. The 'image processing control data' represents data controlling a series of image processing executed for the image data by an image processing apparatus. The image processing apparatus analyzes the image processing control data and the offset data included in the image file to automatically set the values of parameters used for the series of image processing, and makes the image data subjected to the series of image processing with the setting of the parameters. The parameters include 'contrast', 'brightness', 'color balance', 'saturation', 'sharpness', 'gamma value', and 'target color space'. The 'target color space' is a parameter for specifying the color space used in the series of image processing according to the color space used in the process of generating the image data, for example, sRGB color space or NTSC color space.

The image processing control data including the respective parameters mentioned above are preset by the maker of the image data generation apparatus. The image processing control data is used to make the image data subjected to the series of image processing in conformity with the maker's intention. Arbitrary editing of the image processing control data is accordingly not desirable. The procedure of the present invention prepares the image processing control data preset by the maker and the image processing control data that are arbitrarily settable by the user, and generates the image file integrally including the image processing control data and the offset data as well as the image data. Arbitrary combination of the image processing control data with the offset data allows the image data to be subjected to a flexible series of image processing executed by the image processing apparatus, which is capable of utilizing the image processing control data, and to be output from an image output apparatus. In the generated image file, the offset data is distinguishable from the image processing control data. This enhances the degree of freedom in processing the generated image file. For example, the offset data included in the generated image file may be varied or deleted. The specification of the image processing can be readily returned to the original setting of the existing image processing control data by simply deleting the offset data. The offset data may be added to or multiplied by the image processing control data to offset the image processing control data.

The present invention is also directed to a second image data generation apparatus that generates image data and image processing control data used for image processing of the image data. The second image data generation apparatus includes: an image data input module that receives input of an original image file including the image data and the image processing control data; an offset data input module that receives input of offset data of the image processing control data; and an relation generation module that relates the image data to the image processing control data and the offset data.

This arrangement enables subsequent addition of the offset data to the existing original image data and the image processing control data. Like the first image data generation apparatus of the present invention described above, the second image data generation apparatus thus ensures flexible image output.

In accordance with one preferable application of the present invention, the image data generation apparatus further includes an offset data editing module that edits the offset data. The relation generation module generates an image file integrally including the image data, the image processing control data, and the edited offset data.

This arrangement ensures arbitrary editing and flexible setting of the offset data.

In accordance with another preferable application of the present invention, the image data generation apparatus further includes an offset data storage module that stores the offset data in advance. The offset data input module receives the input of the offset data from the offset data storage module.

In this arrangement, frequently used offset data are stored in the offset data storage module and read out according to the requirements. It is desirable to store multiple sets of the offset data. This allows selective use of the multiple sets of the offset data.

In the image data generation apparatus of the present invention, the offset data input module may receive the input of the offset data via a recording medium or via communication.

In this application, the image data generation apparatus takes the offset data from outside of the image data generation apparatus. Diverse offset data can be stored outside the image data generation apparatus, independently of the storage capacity of the image data generation apparatus. The user can thus select desired offset data among the externally stored diverse offset data and input the selected offset data into the image data generation apparatus according to the requirements. For example, a digital still camera maker provides diverse sets of offset data of the image processing control data in a Web page on the Internet, and each user downloads a desired set of offset data and incorporates the downloaded set of offset data into the user's own digital still camera. In another example, each user may utilize offset data set by another user. In one possible application, a simulator may be provided to allow each user to test a variation in output image with modification of the offset data. A desired set of the offset data specified by the user as a result of such simulation is supplied to the image data generation apparatus. This application effectively enhances the convenience of setting the offset data.

In accordance with still another preferable application of the present invention, the image data generation apparatus further includes: an image processing control data editing module that edits the image processing control data and generates edited image processing control data; and an offset data generation module that generates offset data representing a mapping of the edited image processing control data to the image processing control data, based on the edited image processing control data and the image processing control data. The offset data input module receives input of the offset data generated by the offset data generation module.

In this application, the offset data of the image processing control data are generated and utilized inside the image data generation apparatus.

The principle of the present invention is not restricted to the image data generation apparatus discussed above, but is also applicable to an image processing apparatus that makes image data subjected to a preset series of image processing. This application is a sub-combination of the image data generation apparatus described above. The present invention is accordingly directed to an image processing apparatus that makes image data subjected to a preset series of image processing. The image processing apparatus includes: an image data input module that receives input of an image file including the image data, image processing control data used for image processing of the image data, and offset data of the image processing control data; and an image processing module that makes the image data subjected to the preset series of image processing, based on the image processing control data and the offset data.

The image processing apparatus of the present invention receives the image file generated by the image data generation apparatus of the present invention and makes the image data included in the input image file subjected to a preset series of image processing, based on the image processing control data and the offset data included in the input image file.

Like the image data generation apparatus described above, the image processing apparatus of the present invention may be modified to allow addition or editing of the offset data prior to the image processing. The series of image processing may alternatively be performed while the offset data included in the image file is cancelled.

The application of the present invention is not restricted to the image data generation apparatus or the image processing apparatus described above. There are, however, a diversity of other applications of the present invention, for example, a method of generating an image file, an image processing method, computer programs attaining these methods, recording media in which such computer programs are recorded, and data signals including such computer programs and being embodied in carrier waves. The various additions and modifications described above are applicable to any of these embodiments.

When the technique of the present invention is actualized as any of the computer programs, the recording media, and the data signals, the computer program may be the whole program for driving the image data generation apparatus or the image processing apparatus or only the partial program for attaining the characterized functions of the present invention. Typical examples of the recording media include flexible disks, CD-ROMs, magneto-optic discs, IC cards, ROM cartridges, punched cards, prints with barcodes or other codes printed thereon, internal storage devices (memories like a RAM and a ROM) and external storage devices of the computer, and a variety of other computer readable media. These and other objects, features, aspects, and advantages of the present invention will become more apparent from the following detailed description of the preferred embodiments with the accompanying drawings.

### BRIEF DESCRIPTION OF THE DRAWINGS

Fig. 1 schematically illustrates the construction of an image output system in one embodiment of the present invention;
Fig. 2 shows variations of the image output system;
Fig. 3 shows functional blocks of a digital still camera as an image data generation apparatus of a first embodiment;
Fig. 4 is a block diagram schematically illustrating the structure of the digital still camera;
Fig. 5 shows parameters of image processing control data and their settings;
Fig. 6 conceptually illustrates the structure of an image file;
Fig. 7A and Fig.7B show the hierarchical structure of the image file;
Fig. 8 conceptually shows an example of data stored in a MakerNote data storage area;
Fig. 9 is a flowchart showing a routine of generating the image file in the digital still camera of the first embodiment;
Fig. 10 shows functional blocks of another digital still camera as an image data generation apparatus of a second embodiment;
Fig. 11 is a flowchart showing a routine of generating the image file in the digital still camera of the second embodiment;
Fig. 12 shows functional blocks of still another digital still camera as an image data generation apparatus of a third embodiment;
Fig. 13 is a flowchart showing a routine of generating the image file in the digital still camera of the third embodiment;
Fig. 14 is a flowchart showing an image output routine executed in a color printer as an image output apparatus; and
Fig. 15 is a flowchart showing a series of image processing based on the image processing control data.

### DESCRIPTION OF THE PREFERRED EMBODIMENTS

Some modes of carrying out the present invention are discussed below as preferred embodiments in the following sequence:
A. Construction of Image Output System
B. Image data generation apparatus
C. Structure of Image File
D. Generation of Image File
E. Image data generation apparatus of Second Embodiment
F. Image data generation apparatus of Third Embodiment
G. Image Output Apparatus
H. Image Processing in Image Output Apparatus
I. Modifications

### A. Construction of Image Output System

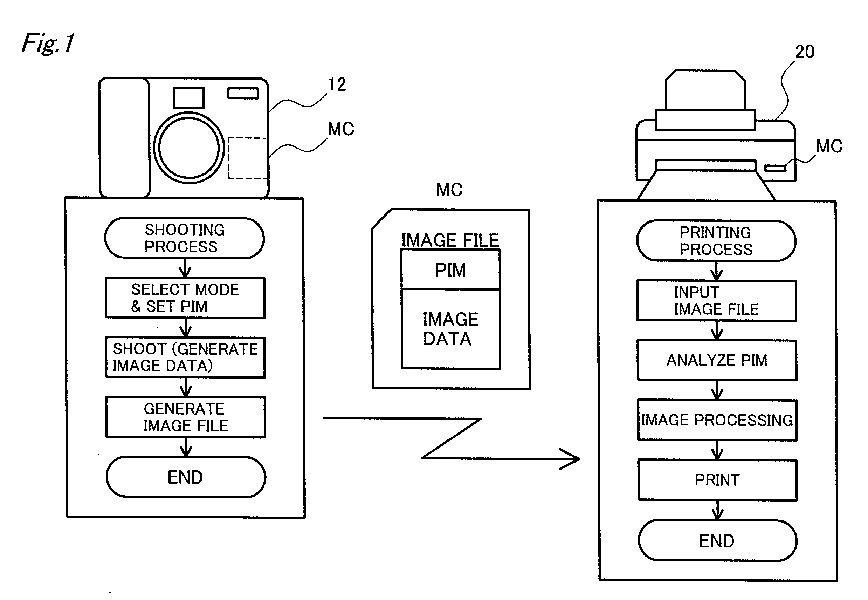

Fig. 1 schematically illustrates the construction of an image output system 10 in one embodiment of the present invention. The image output system 10 of the embodiment includes a digital still camera 12 functioning as an image data generation apparatus and a color printer 20 functioning as an image processing apparatus and an image output apparatus.

Diverse shooting conditions and output control data PIM can be set in the digital still camera 12. The shooting conditions represent conditions for generating image data ,such as the shutter speed, the exposure, and the aperture. The output control data PIM controls a printing process including image processing carried out in the color printer 20, and includes a print command and image processing control data used for image processing. The digital still camera 12 takes images (generates image data) according to the user's setting of the shooting conditions, and generates an image file including the image data and the output control data PIM. The image file thus generated is stored in a memory card MC.

The color printer 20 has an image processing function. The color printer 20 receives input of the image file via the memory card MC or via a non-illustrated cable, and analyzes the output control data PIM included in the image file. The output control data PIM includes the image processing control data. The color printer 20 accordingly reads the image processing control data, causes the input image data to be subjected to image processing based on the image processing control data, and prints the processed image data.

As described above, in the image output system 10 of the embodiment, the digital still camera 12 controls the printing process of the color printer 20 to ensure the printing operation reflecting the requirements of the digital still camera 12 (that is, the user's requirements). The details of the digital still camera 12, the image file, the color printer 20 will be discussed later.

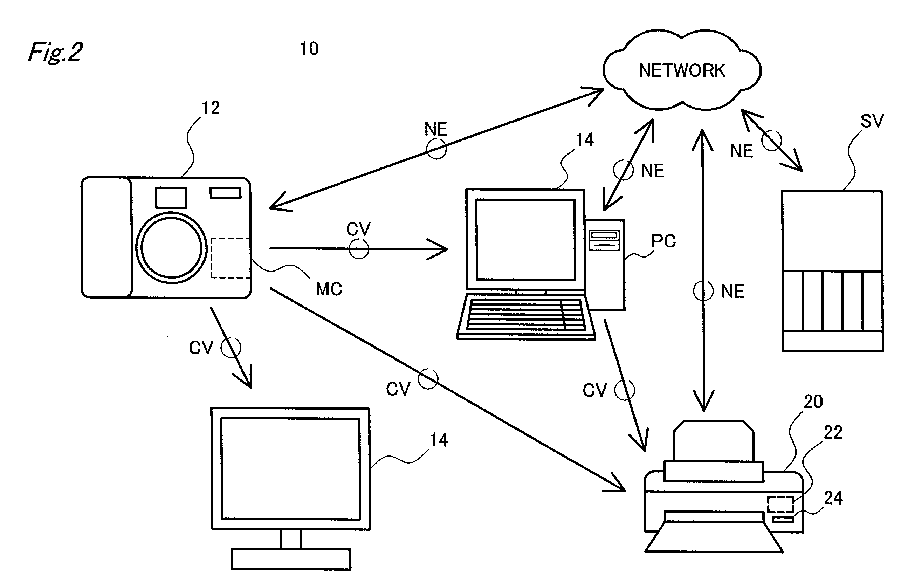

The image output system 10 may be actualized by any of diverse applications. Fig. 2 shows variations of the image output system 10. The image output system 10 may include a personal computer PC and a server SV having the image processing function and a monitor 14 functioning as an image output apparatus, in addition to the digital still camera 12 and the color printer 20 shown in Fig. 1. These constituents are connected to one another directly or via a network by a cable CV or by radio communication for data transmission. A scanner and a digital video camera may also be connectable as the image data generation apparatus.

### B. Image data generation apparatus

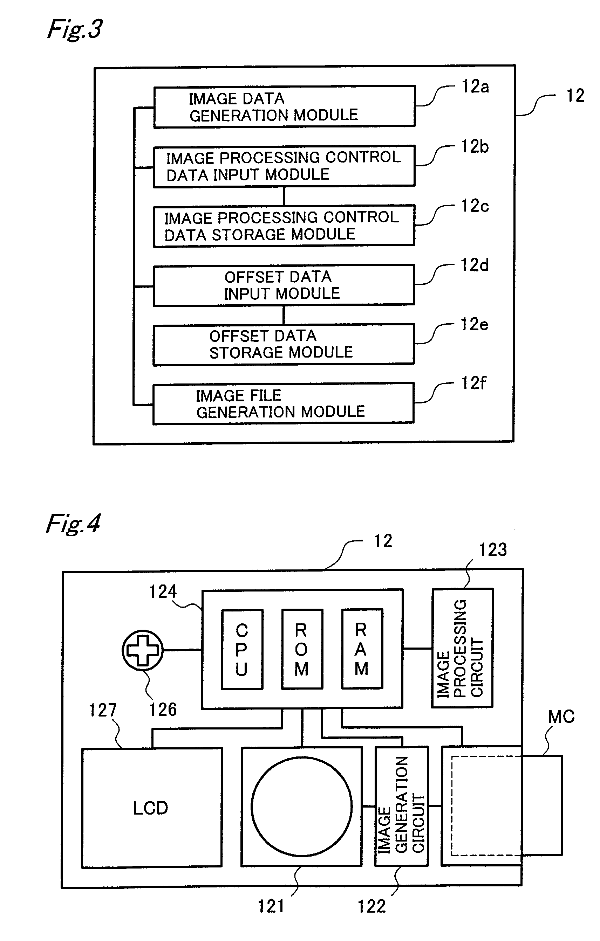

Fig. 3 shows functional blocks of the digital still camera 12 as an image data generation apparatus of a first embodiment according to the present invention. The digital still camera 12 has an image data generation module 12a that generates image data, an image processing control data input module 12b that receives input of image processing control data from an image processing control data storage module 12c, an offset data input module 12d that receives input of offset data of the image processing control data from an offset data storage module 12e, and an relation generation module 12f that generates an image file.

In this embodiment, the image processing control data storage module 12c stores the image processing control data prepared in advance by a maker of the digital still camera 12. The offset data storage module 12e stores the user's setting of the offset data.

The image processing control data input module 12b may also receive input of the image processing control data from an external storage device (for example, a hard disk of the personal computer or the server SV) that stores the image processing control data or a recording medium, in addition to the image processing control data storage module 12c. The input image processing control data is stored in the image processing control data storage module 12c. This mechanism is also applicable to the offset data input module 12d.

The image file generation module 12f generates an image file, in which the image data, the image processing control data, and the offset data are recorded in a predetermined format. The image processing control data and the offset data should be stored in a distinguishable and separable manner.

Fig. 4 is a block diagram schematically illustrating the structure of the digital still camera 12. The digital still camera 12 focuses light information on a digital device (for example, a CCD or a photomultiplier) to generate an image. The digital still camera 12 has an optical circuit 121 that includes a CCD for collecting the light information, an image generation circuit 122 that controls the optical circuit 121 to generate an image, an image processing circuit 123 that processes the generated digital image, and a control circuit 124 that includes a CPU, a ROM, and a RAM and controls the respective circuits.

The digital still camera 12 stores the generated image as digital data into a memory card MC as a storage device. The storage format of image data in the digital still camera 12 is typically JPEG, although another storage format, such as TIFF, GIF, or BMP, may also be applicable.

The digital still camera 12 is also provided with a selection / setting button 126 that is operated for diverse settings of a shooting mode and the image processing control data including the offset data, and a liquid crystal display 127 that is used to preview an image and display various setting windows. The 'shooting mode' is a group of parameters representing image generating conditions set corresponding to each of various shooting situations. The parameters include the time of exposure, the white balance, the aperture, the shutter speed, and the focal length of the lens. In response to the user's selection of a desired shooting mode, the values of the respective parameters are automatically set. The 'image processing control data' is data related to output of the image, for example, the contrast, the brightness, and the color balance, and used for image processing executed in the color printer 20. In this embodiment, plural sets of image processing control data are prepared corresponding to multiple shooting modes.

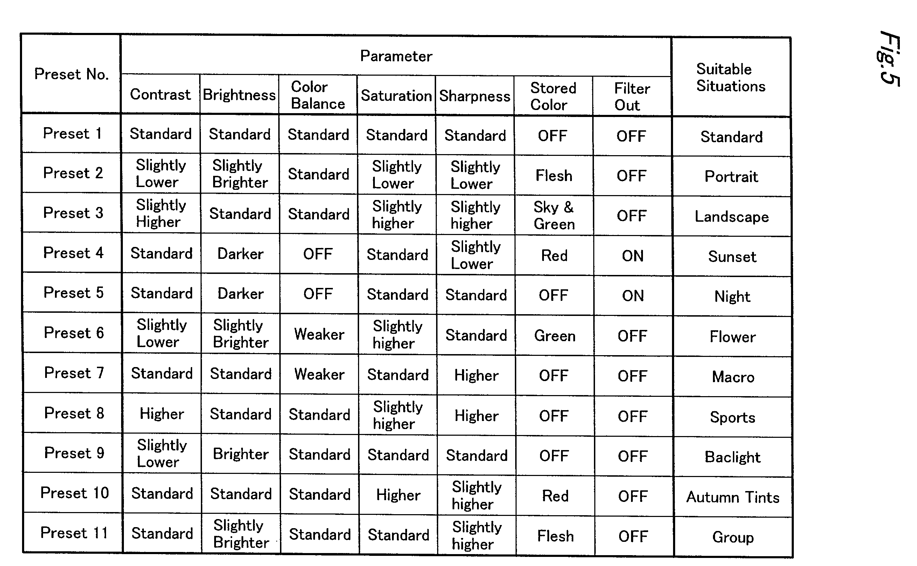

Fig. 5 shows the parameters of the image processing control data and their settings. In this embodiment, eleven presets are prepared in advance corresponding to eleven shooting situations. Each preset includes seven parameters 'contrast', 'brightness', 'color balance', 'saturation', 'sharpness', 'stored color', and 'filter out'. These are the settings prepared by the maker of the digital still camera 12.

The digital still camera 12 used in the image output system 10 of the embodiment generates an image file, which includes the image processing control data set through operations of the selection / setting button 126, the offset data, and the image data, and stores the generated image file into the memory card MC. The image file also includes shooting conditions, such as the gamma value of the digital still camera 12, the target color space, the time of exposure set at the time of shooting, the white balance, the aperture, the shutter speed, and the focal distance of the lens, in addition to the image processing control data. The settings of the parameters applied to the respective shooting modes are stored in the ROM included in the control circuit 124 of the digital still camera 12.

### C. Structure of Image File

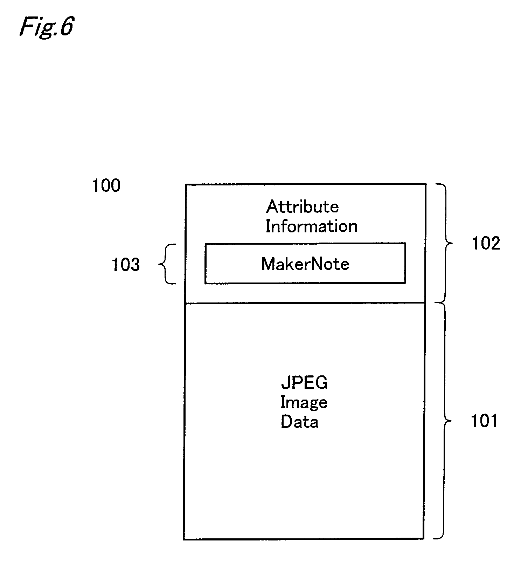

Fig. 6 conceptually illustrates the structure of an image file 100. The image file 100 has a file structure in conformity with an image file format standard (Exif) for digital cameras. Specification of the Exif file is specified by Japan Electronic and Information Technology Industries Association (JEITA).

The image file 100 includes an image data storage area 101 for storing image data and an attribute information storage area 102 for storing diverse attribute information relating to the image data. The image data storage area 101 stores image data in the JPEG format, while the attribute information storage area stores attribute information in the TIFF format. The attribute information storage area 102 has a MakerNote data storage area 103. The MakerNote data storage area 103 is a non-defined area open to the maker of the digital still camera 12. In this embodiment, the image processing control data is stored in the MakerNote data storage area 103. As is known in the art, the file of the Exif format uses a tag for identifying each data. A tag name 'MakerNote' (called MakerNote tag) is allocated to the data stored in the MakerNote data storage area 103.

In this embodiment, the image file 100 is the file of the Exif format, although this format is not restrictive. The image file 100 may have any structure integrally including the image data and the image processing control data in a usable manner.

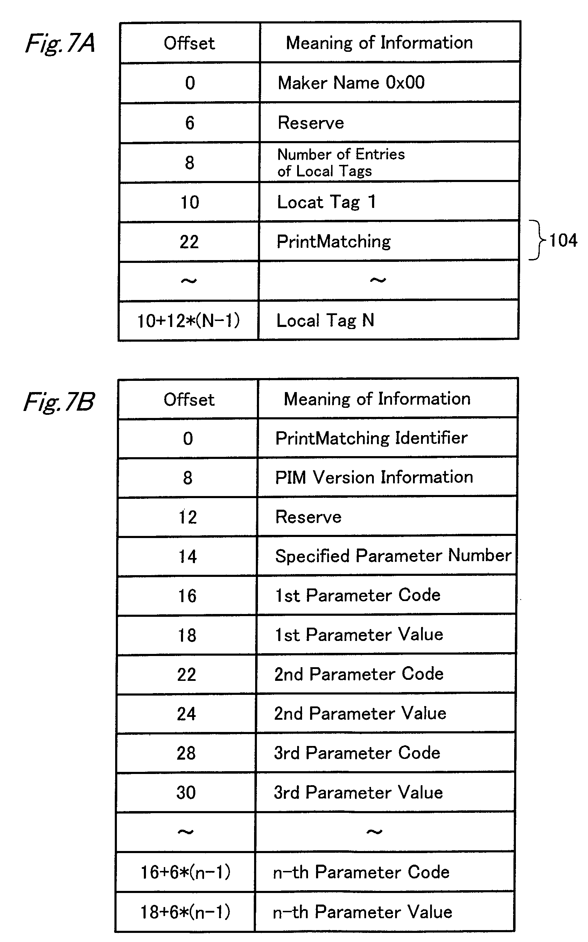

Fig. 7A and Fig.7B show the hierarchical structure of the image file 100. Fig. 7A shows the data structure of the MakerNote data storage area 103, and Fig. 7B shows a PrintMatching data storage area 104 defined in the MakerNote data storage area 103. The PrintMatching data corresponds to the image processing control data.

The MakerNote data storage area 103 in the image file 100 also has a structure using tags to identify the data stored therein. A PrintMatching tag is allocated to the image processing control data. Each tag used in the MakerNote data storage area 103 is specified by a pointer as an offset value from a top address of the MakerNote data storage area 103. Information stored in the MakerNote data storage area 103 includes a maker name (6 bytes) at the top address, which is followed by a reserve area (2 bytes), a number of entries of local tags (2 bytes), and information regarding each local tag offset (12 bytes). A terminal code 0x00 representing an end of a character string is postfixed to the maker name.

Information stored in the PrintMatching data storage area 104 includes a PrintMatching identifier representing storage of PrintMatching parameters, a specified parameter number representing a number of specified parameters, parameter codes allocated to the respective specified parameters as values for identifying the parameters, and setting values of the respective parameters identified by the parameter codes. Each parameter code may be information stored in a 2-byte area, and each parameter setting value may be information stored in a 4-byte area. The image output apparatus fetches the image processing control data (each parameter setting value) with these PrintMatching tags as indication..

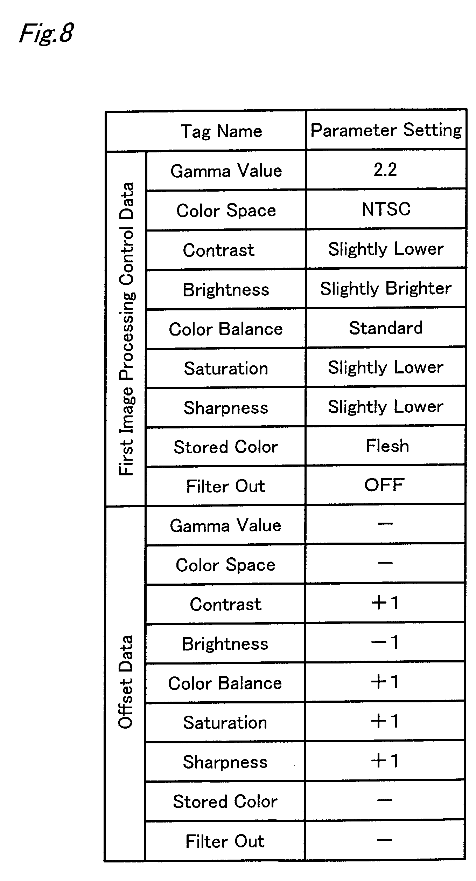

Fig. 8 conceptually shows an example of the data stored in the MakerNote data storage area 103. The image processing control data preset by the maker, for example, the gamma value, the color space, the contrast, the brightness, the color balance, and the saturation are mapped to the user's setting of the offset data, for example, the contrast, the brightness, and the color balance and are stored in the MakerNote data storage area 103. For example, with regard to the parameter 'contrast', 'Slightly Lower' as the image processing control data and '+1' as the offset data (offset value) are stored. The settings 'Slightly Lower' and '+1' are conceptual, and numerical values corresponding to the settings are stored in the actual state. The numerical value corresponding to the setting 'Slightly Lower' may be an offset value from a predetermined reference value.

### D. Generation of Image File

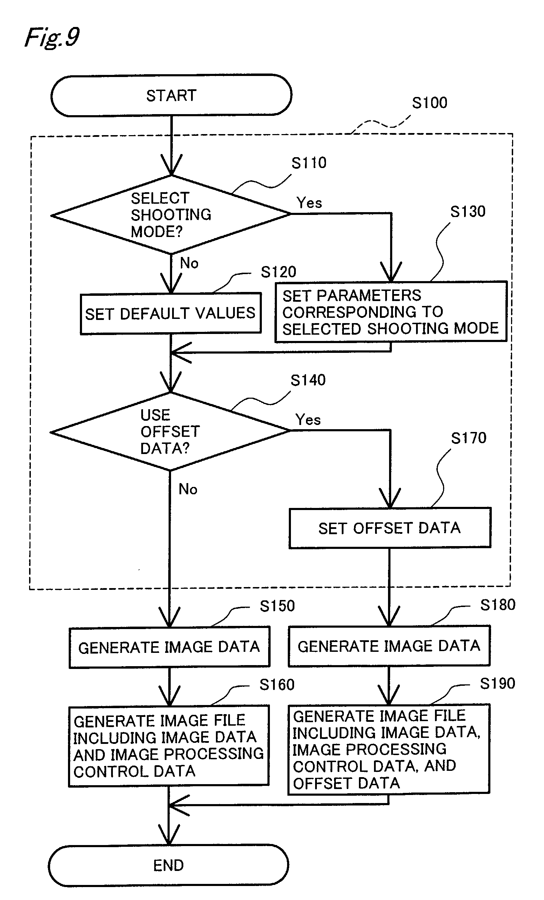

Fig. 9 is a flowchart showing a routine of generating the image file 100 in the digital still camera 12 of the first embodiment. The user sets the shooting mode, and the offset data when used prior to actual shoot (step S100). The user operates the selection / setting button 126 to select and set a desired shooting mode among preset available options shown on the liquid crystal display 127 (steps S110 and S130). The setting of the shooting mode automatically specifies the values of the parameters affecting the generated image data, for example, the exposure suitable for each of preset shooting situations, such as 'Portrait', 'Landscape', and 'Sports', the white balance, the shutter speed, and the aperture. Among the available shooting modes, there are 'Full Auto Mode' in which the digital still camera automatically sets the values of the parameters at the time of shooting regardless of the shooting situation, and 'Manual Mode' in which the user manually sets the desired values to the respective parameters. In response to the user's selection and setting of the shooting mode, the corresponding preset of the image processing control data shown in Fig. 5 is automatically selected. In the case where the user does not specifically select or set the shooting mode, default values in the digital still camera 12 are set to the respective parameters (step S120). The user again operates the selection / setting button 126 to choose use or non-use of the offset data (step S140). In the case of an input representing use of the offset data, the offset data are set to be read from the memory in the course of generating the image file (step S170).

The control circuit 124 generates image data using the values of the parameters automatically set corresponding to the selected shooting mode or shooting conditions, in response to a shooting requirement, for example, in response to a press-down of a shutter button (steps S150 and S180). In the case of an input representing non-user of the offset data at step S140, the control circuit 124 refers to the selected shooting mode and the settings of the respective parameters of the image processing control data, and generates an image file 100 including the image data and the image processing control data (step S160). In the case of an input representing use of the offset data at step S140, on the other hand, the control circuit 124 generates an image file 100 including the mapping of the offset data to the image processing control data stored in the MakerNote data storage area 103 (step S190). The control circuit 124 then records the generated image file 100 in the memory card MC and exits from the routine of generating the image file 100.

The above series of processing causes the image processing control data including the user's setting of the offset data to be stored in the image file 100 recorded in the memory card MC. The ready-made image processing control data are set based on the standard conditions, and the preset values of the parameters do not naturally satisfy all the potential users. The procedure of the embodiment enables addition of the offset data according to the taste of each user. This arrangement thus ensures execution of image processing according to each user's taste and output of a desired resulting image. The offset data are stored to be distinguishable from the image processing control data, and may be readily invalidated to return the specification of the image processing to the original setting specified by the ready-made image processing control data.

The procedure of the embodiment sets the image processing control data corresponding to the selected shooting mode. One modified procedure may store a mapping of the preset shown in Fig. 7A and Fig. 7B to an image processing mode, regardless of the shooting mode and allow separate settings of the image processing mode and the shooting mode.

The above description regards the series of processing for one shot or generation of one image file. The settings of the shooting mode and the offset data (when used) at step S100 may be valid until they are modified or reset.

### E. Image data generation apparatus of Second Embodiment

The digital still camera 12 of the first embodiment utilizes the offset data stored in advance in the offset data storage module 12e for generation of the image file. Another procedure may generate offset data and utilize the generated offset data.

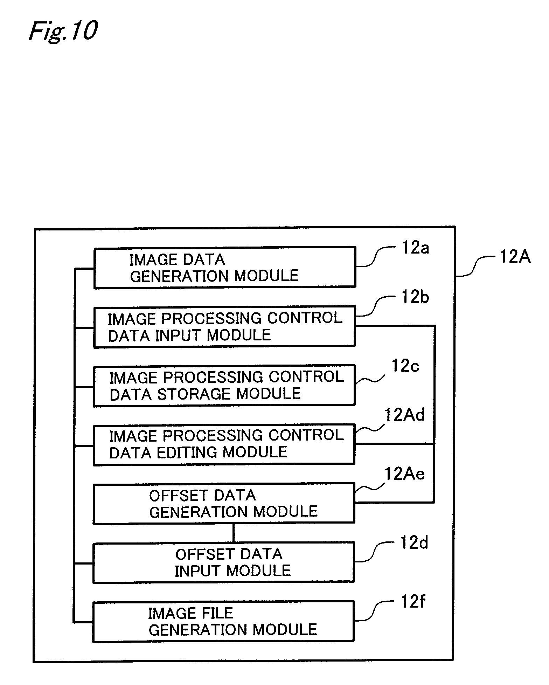

Fig. 10 shows functional blocks of a digital still camera 12A as an image data generation apparatus of a second embodiment according to the present invention. The digital still camera 12A of the second embodiment has an image processing control data editing module 12Ad and an offset data generation module 12Ae, in place of the offset data storage module 12e included in the digital still camera 12 of the first embodiment shown in Fig. 3. Otherwise the structure of the digital still camera 12A is identical with that of the digital still camera 12 of the first embodiment.

The image processing control data editing module 12Ad edits the image processing control data input into the image processing control data input module 12a in response to the user's operations, and temporarily generates edited image processing control data.

The offset data generation module 12Ae generates the offset data, based on the image processing control data and the edited image processing control data. One typical procedure computes a difference between the image processing control data and the edited image processing control data to generate the offset data. The offset data input module 12d receives input of the offset data generated by the offset data generation module 12Ae.

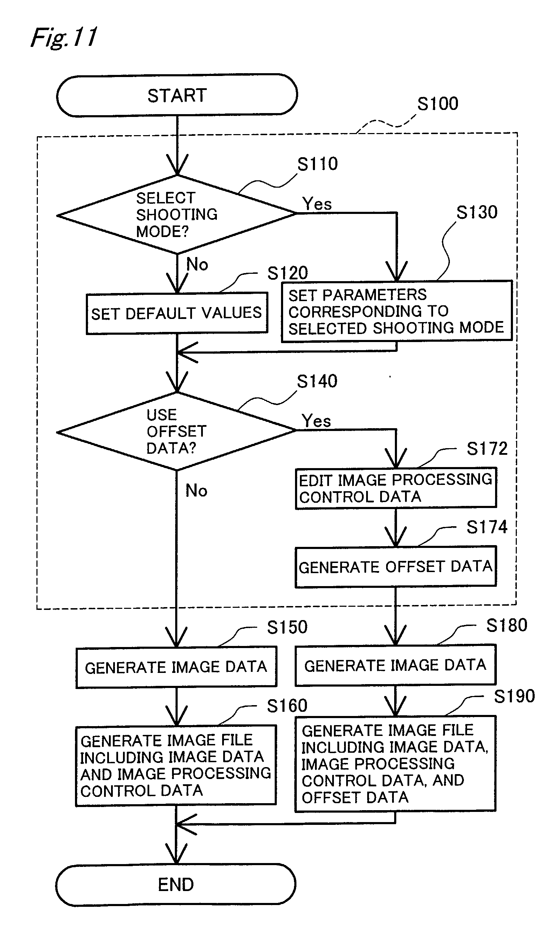

Fig. 11 is a flowchart showing a routine of generating the image file in the digital still camera 12A of the second embodiment. In the case of an input representing use of the offset data at step S140, the control circuit 124 edits the image processing control data (step S172) and generates the offset data (step S174). Otherwise the image file generating routine of the second embodiment shown in Fig. 11 is identical with that of the first embodiment shown in Fig. 9.

Like the image data generation apparatus of the first embodiment, the image data generation apparatus of the second embodiment generates the image file including the image data, the image processing control data, and the offset data.

### F. Image data generation apparatus of Third Embodiment

The procedures of the first embodiment and the second embodiment generate the image file including the image processing control data and the offset data at the time of shoot. Still another procedure may add, delete, or vary the offset data after generation of the image file, that is, after shoot.

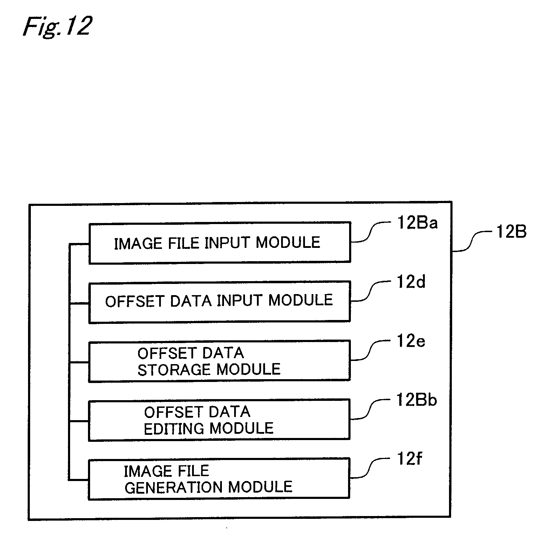

Fig. 12 shows functional blocks of a digital still camera 12B as an image data generation apparatus of a third embodiment according to the present invention. The digital still camera 12B of the third embodiment includes an image file input module 12Ba that receives input of an existing original image file including the image data and the image processing control data, the offset data input module 12d that receives input of the offset data from the offset data storage module 12e, an offset data editing module 12Bb that edits the offset data, and the image file generation module 12f.

The offset data editing module 12Bb edits the offset data input into the offset data input module 12d in response to the user's operations. In the case where the offset data is included in the existing original image file, the offset data editing module 12Bb may edit the existing offset data.

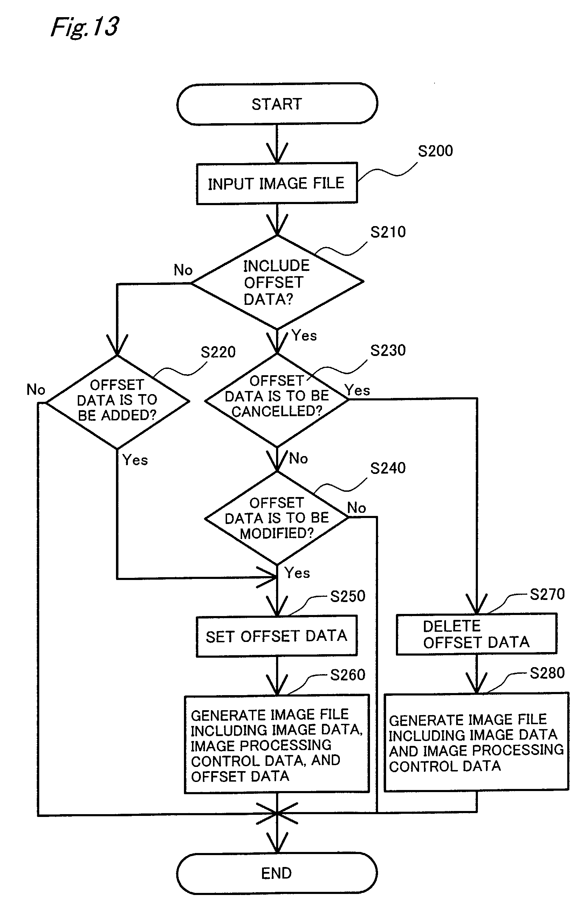

Fig. 13 is a flowchart showing a routine of generating the image file 100 in the digital still camera 12B of the third embodiment. The control circuit 124 first receives input of the existing original image data (step S200). Since presence of the offset data in the input original image data is unknown, the control circuit 124 analyzes the input original image file and determines whether or not the input original image file includes the offset data (step S210).

When the input original image file includes the offset data, the control circuit 124 determines whether or not the offset data are to be cancelled (step S230). In one exemplified structure, the digital still camera 12 may have an input unit for inputting values representing ON state and OFF state of the offset data. The control circuit 124 determines cancellation of the offset data based on the input value. In the case of cancellation of the offset data at step S230, the control circuit 124 deletes the offset data from the image file (step S270) and generates a modified image file including only the image data and the image processing control data (step S280). The program then exists from the image file generation routine. In the case of non-cancellation of the offset data at step S230, on the other hand, the control circuit 124 subsequently determines whether or not the existing offset data are to be modified (step S240). When there is no requirement of modifying the existing offset data, the program immediately exits from this image file generation routine. When there is a requirement of modifying the existing offset data, on the contrary, the control circuit 124 specifies a new set of the offset data (step S250) and generates an image file including the new set of offset data mapped to the image data and the image processing control data (step S260). The specification of the new set of the offset data at step S250 may use the offset data stored in the offset data storage module 12e or the offset data edited by the offset data editing module 12B. The new set of the offset data are written over the existing offset data. The program then exits from the image file generation routine.

When the input original image file does not include any offset data at step S210, the control circuit 124 determines whether or not the offset data are to be added (step S220). When there is no requirement of adding the offset data, the program immediately exits from this image file generation routine. When there is a requirement of adding the offset data, on the contrary, the control circuit 124 specifies a set of the offset data (step S250) and generates an image file including the set of the offset data mapped to the image data and the image processing control data (step S260).

The image data generation apparatus of the third embodiment determines use or non-user of the offset data and flexibly modifies the existing image file to generate a modified image file. When the existing image file includes the offset data, the offset data may be invalidated or modified. When the existing image file does not include the offset data, on the other hand, a desired set of the offset data may be added to the image file.

In the third embodiment, the image file is generated on the digital still camera 12B. Since the procedure of this embodiment does not include generation of the image data, the image file may be generated on the personal computer PC having the same functions as those of the digital still camera 12B.

The first through the third embodiments regard some examples of the image data generation apparatus of the present invention. The image data generation apparatus may be constructed as an arbitrary combination of the main constituents of these embodiments. For example, the image data generation apparatus of the first embodiment may include the offset data editing module of the third embodiment. In another example, the image data generation apparatus of the third embodiment may include the image processing control data editing module and the offset data generation module. The image output apparatus may carry out addition, deletion, and modification of the offset data as discussed later.

### G. Image Output Apparatus

The following describes the color printer 20 as the image output apparatus. The color printer 20 is capable of outputting color images, and may be an ink jet printer that ejects multiple color inks, for example, seven color inks cyan (C), light cyan (LC), magenta (M), light magenta (LM), yellow (Y), dark yellow (DY), and black (K), on a printing medium to create a dot pattern and thereby generate an image. The color printer 20 may be any of other diverse printers, such as an electrophotographic printer that transfers and fixes color toners onto a printing medium to generate an image.

A control circuit 22 of the color printer 20 reads the image file 100 from the memory card MC inserted in a memory card slot 24 (see Fig. 2), analyzes the image processing control data, makes the image data of interest subjected to a series of image processing (discussed later) based on the analyzed image processing control data, and carries out an actual printing operation.

### H. Image Processing in Image Output Apparatus

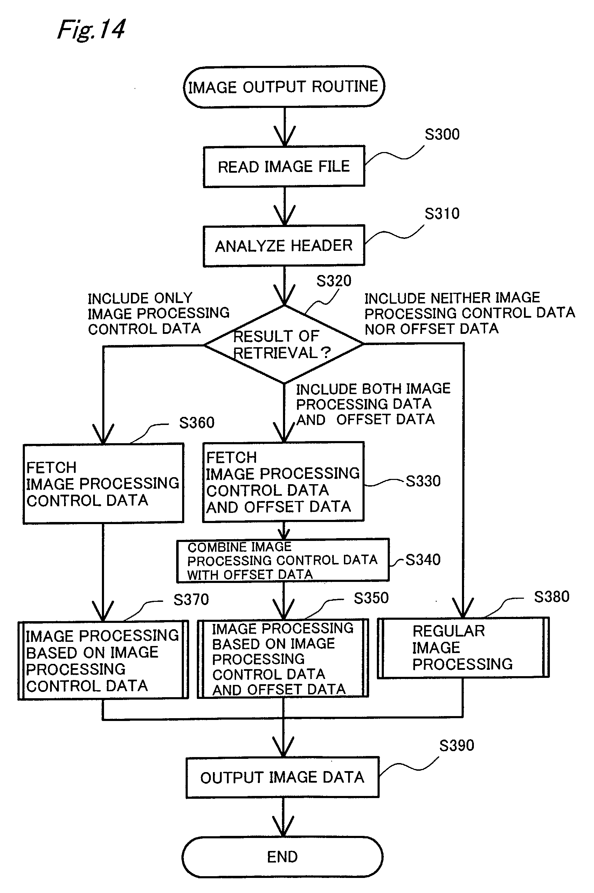

Fig. 14 is a flowchart showing an image output routine executed in the color printer 20 as the image output apparatus. A CPU in the control circuit 22 of the color printer 22 reads the image file 100 from the memory card MC inserted in the memory card slot 24 and temporarily stores the image file 100 into a RAM (step S300). The CPU then analyzes a header of the image file 100 (step S310) and retrieves the image processing control data and the offset data (step S320).

The CPU fetches the image processing control data and the offset data when finding both (step S330), combines the image processing control data with the offset data (step S340), and makes the image data of interest subjected to a preset series of image processing based on the image processing control data and the offset data (step S350). When finding only the image processing control data, the CPU fetches the image processing control data (step S360) and makes the image data of interest subjected to a preset series of image processing based on the image processing control data (step S370). When finding neither the image processing control data nor the offset data, the CPU reads the default values of the parameters set in the color printer 20 from a ROM and makes the image data of interest subjected to a regular series of image processing (step S380).

On completion of the preset series of image processing or the regular series of image processing, the CPU prints out the processed image data (step S390) and exits from this image output routine.

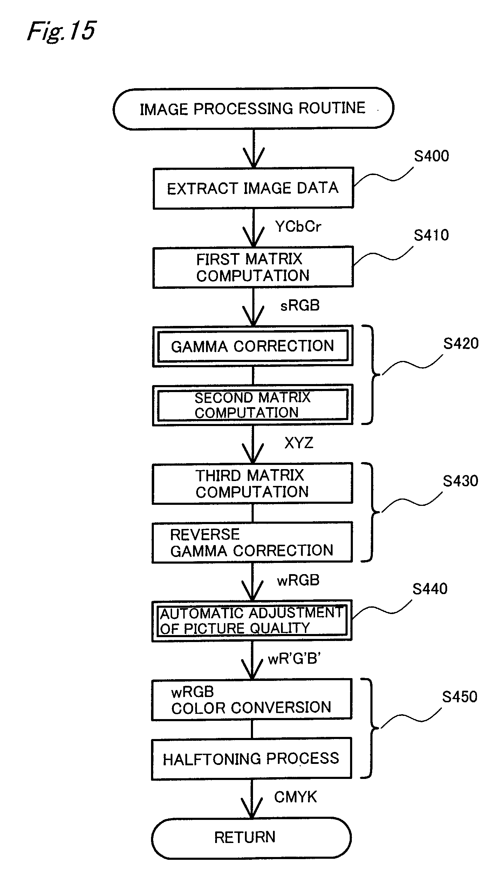

Fig. 15 is a flowchart showing the preset series of image processing based on the image processing control data at step S370. Processing steps using the image processing control data included in the image file 100 are shown by double boxes. The preset series of image processing based on the image processing control data and the offset data is executed on a similar flow.

The CPU of the color printer 20 extracts the image data from the input image file 100 (step S400). The digital still camera 12 stores image data as files of the JPEG format as mentioned previously. The JPEG file stores image data in a YCbCr color space for the enhanced data compression ratio.

The CPU executes first matrix computation to convert the image data in the YCbCr color space into image data in an sRGB color space (step S410).

The CPU executes gamma correction and second matrix computation with regard to the converted image data in the sRGB color space (step S420). In accordance with a concrete procedure, the CPU extracts the setting of the gamma value in the digital still camera 12 from the image processing control data and carries out gamma conversion of the input image data with the extracted gamma value. The second matrix computation converts the sRGB color space into an XYZ color space. The image file 100 of this embodiment may include color space information at the time of generating the image data. When the image file 100 includes the color space information, the CPU refers to the color space information and uses a matrix corresponding to the color space at the time of generating the image data for the second matrix computation.

The resulting image data after execution of the second matrix computation are in the XYZ color space. In the prior art technique, the color space used for the image processing in the printer or the computer is fixed to the sRGB color space, and the color space of the digital still camera 12 can not be utilized effectively. In the technique of this embodiment, on the other hand, the printer (printer driver) can modify the matrix used for the second matrix computation corresponding to the color space information when the image file 100 includes the color space information. The technique of this embodiment thus allows the color space of the digital still camera 12 to be effectively utilized for desired color reproduction.

In order to attain adjustment of the picture quality based on the image processing control data, the CPU executes third matrix computation and reverse gamma correction to concert the color space of the image data from the XYZ into a wRGB (step S430). The wRGB color space is arbitrarily set in a wider range than that of the sRGB color space. In accordance with a concrete procedure, the CPU reads the default setting of the gamma value in the color printer 20 from the ROM and uses the reciprocal of the gamma value for reverse gamma correction of the image data. The CPU uses a matrix corresponding to conversion into the wRGB color space and executes the third matrix computation.

The resulting image data after execution of the third matrix computation are in the wRGB color space. The wRGB color space is wider than the sRGB color space as mentioned previously, and corresponds to the color space producible by the digital still camera 12.

The CPU subsequently executes automatic adjustment of the picture quality of the image (step S440). A concrete procedure of this embodiment reads the values of the respective parameters of the image processing control data (including the offset data) in the image file 100 and uses these parameters for automatic adjustment of the image quality.

On completion of the automatic adjustment of the image quality, the CPU carries out wRGB color conversion and halftoning process for printing (step S450). In accordance with a concrete procedure, the CPU refers to a lookup table (LUT) that is stored in the ROM and representing a mapping of the wRGB color space to a CMYK color space, and converts the color space of the image data from the wRGB color space into the CMYK color space. The image data specified by the R, G, and B tone values are accordingly converted into image data specified by the tone values of the multiple colors, for example, seven colors C, M, Y, K, LC, LM, and DY used in the color printer 20.

The halftoning process receives the color converted image data and carries out tone number conversion. In this embodiment, the color converted image data is expressed as data having a 256 tone width with regard to each color. The color printer 20 of this embodiment, however, takes only either of the two states, 'dot on' and 'dot off and allows local expression of only 2 tones. The image data having 256 tones should thus be converted into image data having 2 tones expressible by the color printer 20. Typical methods applied for such binarization include the error diffusion method and the systematic dither method.

Prior to the color conversion, the color printer 20 executes resolution conversion process to convert the resolution of the image data into the printing resolution. In accordance with a concrete procedure, the color printer 20 carries out linear interpolation to generate additional data between adjoining pairs of image data, when the resolution of the image data is lower than the printing resolution. When the resolution of the image data is higher than the printing resolution, on the contrary, the color printer 20 skips the existing image data at a fixed rate. The color printer 20 also executes interlacing process to rearrange the image data converted into the format representing the dot on-off state in an order to be transferred to the color printer 20.

As described above, the color printer 20 of this embodiment makes the image data included in the image file 100 generated by the digital still camera 12 subjected to a desired series of image processing and outputs the resulting processed image.

The color printer 20 of this embodiment utilizes the image processing control data included in the image file for automatic adjustment of the picture quality of the image data. In the case where the user has set desired conditions for adjustment of the picture quality of the image data, the automatic adjustment of the picture quality is carried out by reflecting the desired settings of the offset data. This arrangement thus desirably solves the problem of the automatic image quality adjustment of the prior art system, that is, no reflection of the user's requirements on the conditions for adjustment of the image quality.

The image processing control data and the offset data included in the image file are used for automatic adjustment of the image quality. The arrangement of this embodiment thus ensures a high-quality printing result reflecting the user's shooting requirements without any intricate adjustment of the picture quality on a photo retouch application or printer driver.

The procedure of the above embodiment executes automatic adjustment of the image quality. The automatic adjustment of the image quality may be carried out in response to activation of an automatic image quality adjustment button provided on a control panel of the color printer 20.

### I. Modifications

In the above embodiments, the color printer 20 carries out all the series of image processing and causes a dot pattern to be created on a printing medium according to the generated image data. In one possible modification, all or part of such image processing may be carried out on the personal computer PC or on the server SV via the network. In the case where the image processing is executed on the personal computer PC, application programs for image data processing, such as a retouch application program and a printer driver, installed in a hard disk of the computer PC should attain the image processing functions described above with reference to Fig. 15. The image file 100 generated in the digital still camera 12 is supplied to the personal computer PC via a cable or via a memory card MC. The application program is activated on the personal computer PC in response to an operation of the user to execute input of the image file 100, analysis of the image processing control data, conversion of the image data, and adjustment of the image quality. Alternatively the application program is automatically activated in response to detection of the inserted memory card MC or the inserted cable to automatically execute input of the image file 100, analysis of the image processing control data, conversion of the image data, and adjustment of the image quality.

In the case where the image processing is executed on the server SV, the application programs stored in a hard disk of the server SV should attain the image processing functions described above with reference to Fig. 15. In response to input of the image file 100, the server SV executes a series of image processing specified by the image processing control data and transmits the resulting processed image file 100 or the resulting processed image data to the personal computer PC as the transmission source or to the color printer 20 as the destination of output. In one possible application, the digital still camera 12 has a function of radio communication and directly transmits an image file including a global IP address of the destination of output to the server SV. The resulting processed image file 100 or the resulting processed image data is then transmitted from the server SV to the color printer 20 having the global IP address allocated thereto as the destination of output.
This attains computer-less printing.

Another possible application allows selection of the settings of the parameters used for automatic adjustment of the image quality. For example, the color printer 20 may be provided with parameter selection buttons or a shooting mode parameter selection button for selecting the settings of the parameters corresponding to a subject. These selection buttons may be operated to select the settings of the parameters used for automatic adjustment of the image quality. When the automatic adjustment of the image quality is executed on the personal computer PC, the settings of the parameters used for automatic adjustment of the image quality may be selected on a user interface of the printer driver or the retouch application program.

Any of the embodiments discussed above uses the color printer 20 as the image output apparatus. An image display apparatus, such as a CRT, an LCD, or a projector, may also be usable as the image output apparatus. In this structure, the image display apparatus executes the image processing programs (display driver) to execute the series of image processing described above with reference to the flowcharts of Figs. 14 and 15. When the CRT or another image display apparatus functions as the display of the computer executes the image processing programs. In the case of the image display apparatus, the resulting output image data is not in the CMYK color space but in the RGB color space.

While the resulting print output from the color printer 20 reflects the requirements of the user at the time of generating the image data, the resulting display output from the image display apparatus like the CRT desirably reflects the requirements of the user at the time of generating the image data.

The image file 100 of this embodiment may be an image file taken in the process of capturing a preset frame (scene) in digital television broadcast. The image data in the digital television broadcast is data based on the YCbCr color space. The principle of the present invention is accordingly applicable to such image data in the digital television broadcast, as in the case of the image data in the digital still camera 12. A concrete procedure takes in a preset captured frame or scene as image data, sets image processing control data corresponding to the intake image data, and generates the image file 100 including the image data and the image processing control data. A resulting output image has sufficiently high saturation comparable to the color in the digital television broadcast.

The above description regards the image data generation apparatus, the image output apparatus, the image output system, and the corresponding programs according to the present invention as the preferred embodiments. The above embodiments and their modifications are to be considered in all aspects as illustrative and not restrictive. There may be many modifications, changes, and alterations without departing from the scope or spirit of the main characteristics of the present invention. All changes within the meaning and range of equivalency of the claims are therefore intended to be embraced therein.

In the above embodiments, the parameters including the gamma value, the color space, the brightness, and the sharpness are used as the image processing control data. The parameters utilized for the image processing control data are not restricted to these embodiments, but may be selected arbitrarily.

The values of the respective parameters enumerated in the table of Fig. 8 are only illustrative and do not restrict the present invention in any sense. The values of the matrix used for the series of image processing shown in Fig. 15 are adequately varied depending upon the target color space or the color space available in the color printer 20, although no example is specifically given. Each element of the matrix is one of the image processing control data affecting the output image, and offset data of the matrix may also be applicable.

In the above embodiments, the digital still camera 12 is used as the image data generation apparatus. A scanner and a digital video camera are some of the other examples applicable for the image data generation apparatus. In the case of the scanner, specification of the intake data information included in the image file 100 may be carried out on the computer PC. Alternatively the scanner alone may implement such specification using a preset button, to which preset information is allocated, or a dialog box and a setting button for arbitrary settings.

In the above embodiments, the image file 100 is the file of the Exif format, although this format is not restrictive. The image file may have any format including the image data generated by the image data generation apparatus and the image processing control data describing the output conditions of the image data.
Any of such image files does not require the image output apparatus to set the image processing conditions for each printing operation. The image output system thus immediately carries out the required series of image processing based on the specified image processing conditions, automatically adjusts the picture quality of the image data generated by the image data generation apparatus to an appropriate level, and outputs the adjusted image data from the image output apparatus. The scope and spirit of the present invention are indicated by the appended claims, rather than by the foregoing description.

## Claims

1. An image data generation apparatus that generates image data related to image processing control data used for image processing of the image data, said image data generation apparatus comprising:
an image data generation module that generates the image data;
an image processing control data input module that receives input of the image processing control data;
an offset data input module that receives input of offset data of the image processing control data; and
a relation generation module that relates the image data to the image processing control data and the offset data.

2. An image data generation apparatus in accordance with claim 1,
wherein said relation generation module generates an image file including the image data, the image processing control data, and the offset data.

3. An image data generation apparatus in accordance with claim 1, said image data generation apparatus further comprising:
an offset data editing module that edits the offset data,
wherein said relation generation module relates the image data to the image processing control data and the edited offset data.

4. An image data generation apparatus in accordance with claim 1, said image data generation apparatus further comprising:
an offset data storage module that stores the offset data in advance,
wherein said offset data input module receives the input of the offset data from said offset data storage module.

5. An image data generation apparatus in accordance with claim 1, wherein said offset data input module receives the input of the offset data via a recording medium or via communication.

6. An image data generation apparatus in accordance with claim 1, said image data generation apparatus further comprising:
an image processing control data editing module that edits the image processing control data and generates edited image processing control data; and
an offset data generation module that generates offset data representing a mapping of the edited image processing control data to the image processing control data, based on the edited image processing control data and the image processing control data,
wherein said offset data input module receives input of the offset data generated by said offset data generation module.

7. An image data generation apparatus that generates image data related to image processing control data used for image processing of the image data, said image data generation apparatus comprising:
an image data input module that receives input of the image data and the image processing control data;
an offset data input module that receives input of offset data of the image processing control data; and
a relation generation module that relates the image data to the image processing control data and the offset data.

8. An image data generation apparatus in accordance with claim 7,
wherein said relation generation module generates an image file including the image data, the image processing control data, and the offset data.

9. An image data generation apparatus in accordance with claim 7, said image data generation apparatus further comprising:
an offset data editing module that edits the offset data,
wherein said relation generation module relates the image data to the image processing control data and the edited offset data.

10. An image data generation apparatus in accordance with claim 7, said image data generation apparatus further comprising:
an offset data storage module that stores the offset data in advance,
wherein said offset data input module receives the input of the offset data from said offset data storage module.

11. An image data generation apparatus in accordance with claim 7, wherein said offset data input module receives the input of the offset data via a recording medium or via communication.

12. An image data generation apparatus in accordance with claim 7, said image data generation apparatus further comprising:
an image processing control data editing module that edits the image processing control data and generates edited image processing control data; and
an offset data generation module that generates offset data representing a mapping of the edited image processing control data to the image processing control data, based on the edited image processing control data and the image processing control data,
wherein said offset data input module receives input of the offset data generated by said offset data generation module.

13. An image processing apparatus that makes image data subjected to a preset series of image processing, said image processing apparatus comprising:
an image data input module that receives input of the image data, image processing control data used for image processing of the image data, and offset data of the image processing control data; and
an image processing module that makes the image data subjected to the preset series of image processing, based on the image processing control data and the offset data.

14. A method of generating image data related to image processing control data used for image processing of the image data, said method comprising the steps of:
(a) generating the image data;
(b) fetching the image processing control data;
(c) fetching offset data of the image processing control data; and
(d) relating the image data to the image processing control data and the offset data.

15. A method of generating image data related to image processing control data used for image processing of the image data, said method comprising the steps of:
(a) receiving an original image file including the image data and the image processing control data;
(b) fetching offset data of the image processing control data; and
(c) relating the image data to the image processing control data and the offset data.

16. An image processing method that makes image data subjected to a preset series of image processing, said image processing method comprising the steps of:
(a) receiving the image data, image processing control data used for image processing of the image data, and offset data of the image processing control data; and
(b) making the image data subjected to the preset series of image processing, based on the image processing control data and the offset data.

17. A recording medium in which a computer program is recorded in a computer readable manner, said computer program generating image data related to image processing control data used for image processing of the image data, said computer program causing a computer to attain the functions of:
generating the image data;
fetching the image processing control data;
fetching offset data of the image processing control data; and
relating the image data to the image processing control data and the offset data.

18. A recording medium in which a computer program is recorded in a computer readable manner, said computer program generating image data related to image processing control data used for image processing of the image data, said computer program causing a computer to attain the functions of:
receiving an original image file including the image data and the image processing control data;
fetching offset data of the image processing control data; and
relating the image data to the image processing control data and the offset data.

19. A recording medium in which a computer program is recorded in a computer readable manner, said computer program making image data subjected to a preset series of image processing, said computer program causing a computer to attain the functions of:
receiving the image data, image processing control data used for image processing of the image data, and offset data of the image processing control data; and
making the image data subjected to the preset series of image processing, based on the image processing control data and the offset data.
